# EUROPEAN PATENT SPECIFICATION

(11) **EP 4 277 072 B1**
(45) Date of publication and mention of the grant of the patent: **15.10.2025**
(21) Application number: 22172604.5
(22) Date of filing: 10.05.2022
(51) Int. Cl.: H02J 3/28, H02J 15/00

(54) **ENERGY STORAGE SYSTEM, COMPUTER-IMPLEMENTED METHOD THEREFOR, COMPUTER PROGRAM AND NON-VOLATILE DATA CARRIER**
ENERGIESPEICHERSYSTEM, COMPUTERIMPLEMENTIERTES VERFAHREN DAFÜR, COMPUTERPROGRAMM UND NICHTFLÜCHTIGER DATENTRÄGER
SYSTÈME DE STOCKAGE D'ÉNERGIE, PROCÉDÉ MIS EN UVRE PAR ORDINATEUR CORRESPONDANT, PROGRAMME INFORMATIQUE ET SUPPORT DE DONNÉES NON VOLATILES

(43) Date of publication of application: 15.11.2023
(73) Proprietor: Lunettutsikten Sven Lennart Augustsson AB, 542 66 Sjötorp (SE)
(72) Inventor: AUGUSTSSON, Lennart, SJÖTORP (SE)
(74) Representative: Brann AB

(56) References cited:
- JP-A- 2004 183 637
- US-A1- 2020 309 085
- US-A1- 2021 351 615

## Description

### TECHNICAL FIELD

The present invention relates generally to optimizing the process of producing and delivering electrical energy. Especially, the invention relates to an energy storage system according to the preamble of claim 1 and a corresponding computer-implemented method. The invention also relates to a computer program and a non-volatile data carrier storing such a computer program.

### BACKGROUND

Today's electricity consumers have an increasing blend of energy sources to choose from. Typically, due to variations in the production conditions well as the consumption patterns, the supply and demand of the electricity vary substantially over time, both in the short-term and the long-term perspective. It is therefore complicated to ensure that a given consumer has access to the amount of energy that he/she demands at all times. In particular, this is true for electricity produced based on renewable sources of energy, such as solar, wind, wave, tidal and/or rain energy.

For efficiency reasons, it would, of course be beneficial to temporarily store the produced electrical energy in batteries and/or capacitive elements until there is a demand therefor. However, these types of storage means are still too expensive to provide an economically feasible alternative, especially for larger amounts of energy. Consequently, different kinds of energy conversion arrangements have been developed to bridge the temporal gap between the production and consumption of the electrical energy.

For example, US 10,358,975 discloses a compressed air energy storage and power generation device that includes a motor, a compressor, a pressure accumulation tank, an expander and a generator. The motor is driven by a fluctuating input power. The compressor is mechanically connected to the motor and compresses air. The pressure accumulation tank is fluidly connected to the compressor and stores air compressed by the compressor. The expander is fluidly connected to the pressure accumulation tank and is driven by compressed air supplied from the pressure accumulation tank. The generator is mechanically connected to the expander and generates power to be supplied to a user. A cooling water flow path, whereby water flows inside a cooling water pipe for cooling air that is a working fluid, is provided inside a casing of the compressor. As a result, the compressed air energy storage and power generation device can be provided that is capable of efficiently reducing compressive axial force and of reducing power consumption.

FR 3 038 349 describes an electrical energy storage device using compressed air in which the heat produced by the compression is stored in a natural medium and used in addition to stored mechanical energy as compressed air to produce electrical energy in a conversion module using a quasi-isothermal two-phase water/air expansion and action turbine coupled to an alternator.

US 4,249,385 shows a two-phase thermal energy conversion system that employs an evaporable liquid such as water, and a gas which is not liquefiable within the operating temperature and pressure ranges, such as air. The water and air are mixed and one of the two or both are heated so that the water evaporates and is absorbed by the air to result in a pressure increase. The increase of pressure or volume can be converted into mechanical energy by a prime mover such as a turbine or reciprocating piston engine. The heat of condensation is utilized and converted into mechanical power while the temperature and pressure are reduced. The liquid, such as water, may be below its boiling point. If the water consists of salt water, fresh water is derived as a condensation product from the prime mover.

US 2021/0104912 reveals a CAES (Compressed air energy storage) power generation device, which includes a compression/ expansion/combined machine, a pressure accumulation unit for storing compressed air, a low temperature water storage tank and a high temperature water storage tank, heat exchangers, and liquid maintaining units. The compression/expansion/combined machine has a function of compressing air using the electrical power and a function of expanding the compressed air to generate electrical power. The low temperature water storage tank and the high temperature water storage tank store liquid water and are fluidly connected to each other. The heat exchangers exchange heat between the compressed air and the water. The liquid maintaining units pressurize the water flowing through the heat exchangers and maintain the water in a liquid form.

JP2004-183637A discloses a power generation device that exploits the buoyancy of gas bubbles rising in water under high pressure. The system uses vertically standing tubes submerged in a body of water, into which bubbles are introduced either via electrolysis or by injecting compressed air. As the bubbles rise, they expand due to the decreasing water pressure and generate an upward flow of water within the tube. This water flow drives a rotating device connected to a generator. Although the rising bubbles induce the water flow, only the water physically drives the turbine or rotating device. The bubbles themselves do not act on the turbine. The bubbles can be generated by electrolysis using electricity from renewable sources such as wind or solar power, or by releasing previously compressed air. In some embodiments, the generated hydrogen is collected for use in fuel cells.

US 2021/0351615 A1 discloses an energy storage and electrical power generation system configured to store energy in the form of compressed air. The system comprises one or more energy storage branches, each including an air compressing vessel and an air storage vessel. Atmospheric air and water are introduced into the compressing vessel, where the air is compressed and transferred to the storage vessel. The compressed air, which is at a temperature higher than the ambient temperature, is later released together with water to form a mixture of gas and water, which flows through a riser tube and drives a turbine. The document acknowledges that higher water temperatures improve the performance of this gas-water flow. The system includes valve assemblies and manifolds to control the storage and release processes.

Thus, different energy-storage solutions are known, which inter alia rely on compressed air for temporary storage, and where electricity is regenerated through a process involving mixing compressed air with another fluid, e.g. water. However, the known solutions require relatively complex and/or expensive installations and components.

### SUMMARY

The object of the present invention is therefore to offer an uncomplicated and cost-efficient solution that solves the problem of temporarily storing electrical energy being produced intermittently. According to one aspect of the invention, the object is achieved by an energy storage system according to claim 1 for obtaining incoming intermittent electrical energy and delivering output electrical energy on demand, which system contains an accumulator tank and first and second sets of energy converters. The first set of energy converters is configured to pick up ambient air and based thereon produce pressurized air in the accumulator tank using the incoming intermittent electrical energy. For example, the first set of energy converters may be configured to produce the pressurized air in the accumulator tank by means of a CAES technique or a liquid air energy storage (LAES) technique. The second set of energy converters is configured to obtain the pressurized air from the accumulator tank, inject the pressurized air into a volume of water so as to cause a mixed flow of water and air in which mixed flow a water part alternately attains potential energy and kinetic energy. The second set of energy converters is further configured to produce the output electrical energy based on the water part flow only of the mixed flow.

The above energy storage system is advantageous because producing the output electrical energy based on the water part flow only renders the design of the system uncomplicated and robust.

According to the invention, the first set of energy converters contains an electric motor, a compressor and a cooler. The electric motor is configured to be operated in response to the incoming intermittent electrical energy. The compressor is configured to be driven by the electric motor and produce the pressurized air based on the ambient air. The cooler is configured to exchange heat from the compressor and thus produce heated water. Thereby, the incoming electrical energy is managed in an overall efficient manner.

According to the invention, the energy storage system includes a first fluid reservoir configured to separate out air from the mixed flow of water and air, and at least one first conduit configured to convey the mixed flow of water and air to the first fluid reservoir.

According to the invention, the energy storage system also includes a second fluid reservoir and at least one second conduit, which is configured to convey the water part flow from the first fluid reservoir to the second fluid reservoir. The second fluid reservoir is arranged in fluid connection with a diffusor of the second set of energy converters. The diffusor is configured to inject the pressurized air into the volume of water to cause the mixed flow of water and air. Hence, the mixed flow of water and air may be charged with a substantial amount of kinetic energy.

According to the invention, the second set of energy converters contains a turbine and a generator. The turbine is configured to be propelled by the water part flow. The generator is mechanically connected to a rotation axis of the turbine, and the generator is configured to produce the output electrical energy in response to actuation of the turbine. This provides a highly efficient exchange of electrical energy, since the turbine is propelled by the water part flow only of the mixed flow of water and air.

According to the invention, the energy storage system contains a hot-water conduit configured to feed the heated water from the cooler into the second fluid reservoir. Thus, an additional portion of the incoming energy is transferred into the mixed flow of water and air.

According to an embodiment of this aspect of the invention, the accumulator tank and the first set of energy converters are comprised in a surface vessel, the second fluid reservoir is configured to be submerged in a body of water below the surface vessel, and the at least one second conduit is constituted by the body of water. Thereby, the energy storage system may be installed in any kind of watercourse. This, in turn, vouches for both flexibility and cost efficiency.

According to yet another embodiment of this aspect of the invention, the second set of energy converters is specifically configured to produce the output electrical energy based on the water part flow flowing in a downward direction. Thereby, the potential energy of the water may be efficiently employed.

According to still another embodiment of this aspect of the invention, the second set of energy converters is instead specifically configured to produce the output electrical energy based on the water part flow flowing in an upward direction. Thereby the compressed air's hauling effect on the water may be directly utilized in the production of the output electrical energy.

According to another embodiment of this aspect of the invention, the energy storage system contains low- and high-level water storage pools respectively that are arranged at different heights relative to the sea level. Here, a bi-directional conduit is arranged between the low- and high-level water storage pools, which bi-directional conduit includes the turbine and the generator. The energy storage system further contains a valve arrangement, which is configured to selectively cause a fluid connection between the low- and high-level water storage pools. Here, the low-level water storage pool, in turn, contains the second fluid reservoir. The low-level water storage pool is configured to hold water at a first level of potential energy. The diffusor is configured to pump an amount of water from the low-level water storage pool via the second fluid reservoir and the bi-directional conduit up to the high-level water storage pool in the form of the mixed flow. Consequently, the amount of pumped up water, when located in the high-level water storage pool, attains a second level of potential energy above the first level of potential energy. The valve arrangement is operable in response to a control signal, and the valve arrangement is configured to let water from the high-level water storage pool descend through the bi-directional conduit to the low-level water storage pool thus causing the generator to produce the output electrical energy. This embodiment is advantageous because it allows comparatively large amounts of energy to be temporarily stored in the form of potential energy.

According to another aspect of the invention, the object is achieved by a computer-implemented method according to claim 7.
The advantages of this method, as well as the preferred embodiments thereof are apparent from the discussion above with reference to the proposed energy storage system.

According to a further aspect of the invention, the object is achieved by a computer program according to claim 8 loadable into a non-volatile data carrier communicatively connected to a processing unit. The computer program includes software for executing the above method when the program is run on the processing unit.

According to another aspect of the invention, the object is achieved by a non-volatile data according to claim 9 containing the above computer program.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: schematically illustrates an energy storage system according to a first embodiment of the invention;
- Figure 2: schematically illustrates an energy storage system according to a second embodiment of the invention;
- Figure 3: schematically illustrates an energy storage system according to a third embodiment of the invention;
- Figures 4a-b: schematically illustrate an energy storage system according to a fourth embodiment of the invention; and
- Figure 5: illustrates, by means of a flow diagram, the general method according to the invention.

### DETAILED DESCRIPTION

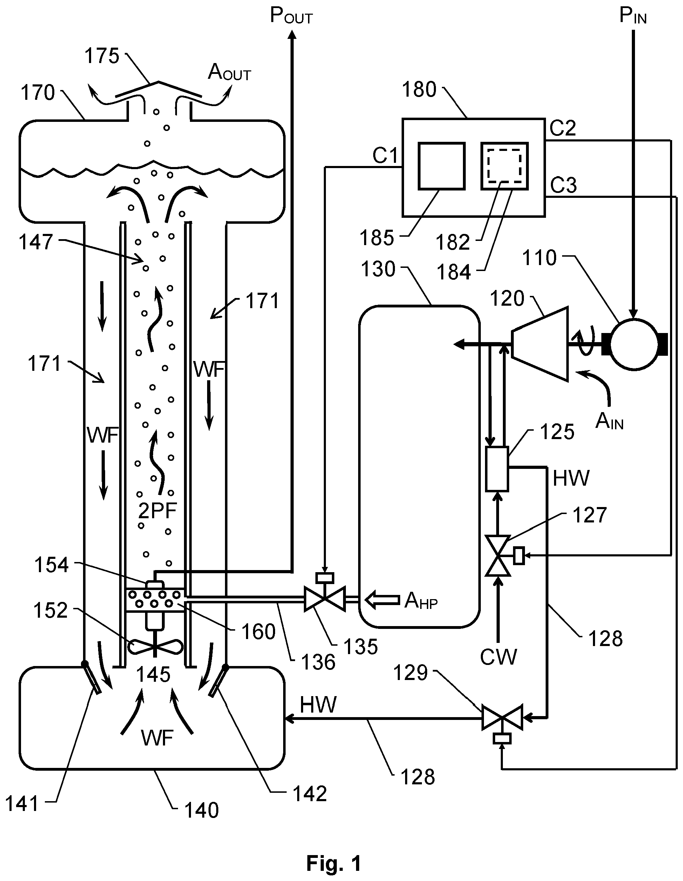

The invention is defined by the independent claims, advantageous embodiments are provided by the dependent claims. In Figure 1, we see a schematic illustration of an energy storage system according to a first embodiment of the invention for obtaining incoming intermittent electrical energy P_{IN} and delivering output electrical energy P_{OUT} on demand.

The incoming intermittent electrical energy P_{IN} is presumed to originate from at least one renewable source of energy, such as electricity produced by a solar energy plant, a windmill farm, a wave energy plant, a tidal energy plant and/or a rain energy installation.

The system contains an accumulator tank 130, a first set of energy converters and a second set of energy converters. The first set of energy converters is configured to pick up ambient air A_{IN} and based thereon produce pressurized air A_{HP} in the accumulator tank 130 using the incoming intermittent electrical energy P_{IN}. In Figure 1, the first set of energy converters is represented by an electric motor 110 configured to be operated in response to the incoming intermittent electrical energy P_{IN}, a compressor 120 configured to be driven by the electric motor 110 and produce the pressurized air A_{HP} based on the ambient air A_{IN}, and a cooler 125 configured to exchange heat from the compressor 120 and thus produce heated water HW.

The second set of energy converters is configured to obtain the pressurized air A_{HP} from the accumulator tank 130, inject the pressurized air A_{HP} into a volume of water so as to cause a mixed flow 2PF of water and air in which mixed flow a water part WF alternately attains potential energy and kinetic energy, and produce the output electrical energy P_{OUT} based on the water part flow WF only of the mixed flow 2PF. In Figure 1, the second set of energy converters is represented by a turbine 152 configured to be propelled by the water part flow WF and a generator 154 mechanically connected to a rotation axis of the turbine 152, which generator 154 is configured to produce the output electrical energy P_{OUT} in response to actuation of the turbine 152. The second set of energy converters also includes a diffusor 160 configured to inject the pressurized air A_{HP} into the volume of water to cause the mixed flow 2PF of water and air.

According to one embodiment of the invention, the first set of energy converters 110, 120 and 125 is configured to produce the pressurized air A_{HP} in the accumulator tank 130 by means of a CAES technique or a LAES technique.

The energy storage system includes a first fluid reservoir 170 configured to receive the mixed flow 2PF of water and air. The first fluid reservoir 170 is also configured to separate out air A_{OUT} from the mixed flow 2PF, so that the air may escape from the first fluid reservoir 170 and be returned to the surround atmosphere, for example via an air vent 175.

In the embodiment illustrated in Figure 1, a first conduit 147 is configured to convey the mixed flow 2PF of water and air to the first fluid reservoir 170.

Here, water to be included in the mixed flow 2PF of water and air is stored in a second fluid reservoir 140, where the water is heated by the heated water HW from the compressor 120, which is fed to the second fluid reservoir 140 via a pipe 128. Preferably, a valve 129 is arranged on the pipe 128, which valve 129 is controllable in response to a control signal C3 from a control unit 180. Thus, an amount of heated water supplied to the second fluid reservoir 140 may be controlled via a control algorithm implemented in the control unit 180.

Preferably, the control unit 180 is further configured to produce a control signal C2 to a valve 127 through which cold water CW may be fed into the cooler 125.

In the embodiment illustrated in Figure 1, a second conduit 171 is configured to convey the water part flow WF from the first fluid reservoir 170 down to the second fluid reservoir 140. Here, the second conduit 171 encloses the first conduit 147 concentrically. However, as will be apparent from the below, according to the invention, any other arrangement of the first and second conduits is conceivable.

The second fluid reservoir 140 is arranged in fluid connection with a diffusor 160, which forms part of the second set of energy converters. The diffusor 160 is configured to inject the pressurized air A_{HP} from the accumulator tank 130 into a volume of water in the second fluid reservoir 140 to cause the mixed flow 2PF of water and air. As a result, water is drawn from the second fluid reservoir 140 to form the water part flow WF of the mixed flow 2PF of water and air, which continues up to the first fluid reservoir 170. Preferably, a valve 135 is arranged on a pipe 136 feeding the pressurized air A_{HP} between the accumulator tank 130 and the second fluid reservoir 140, which valve 135 is controllable in response to a control signal C1 from the control unit 180. Consequently, whenever there is a demand for output electrical energy P_{OUT} the control unit 180 may control the valve 135 to feed the pressurized air A_{HP} into the second fluid reservoir 140 so as to start the mixed flow 2PF of water and air that causes the water part flow WF thereof to enter an inlet 145 to the second conduit 171 and thereby propel the turbine 152 while the water part flow WF flows in an upward direction through the second conduit 171, which results in that the generator 154 produces the output electrical energy P_{OUT}.

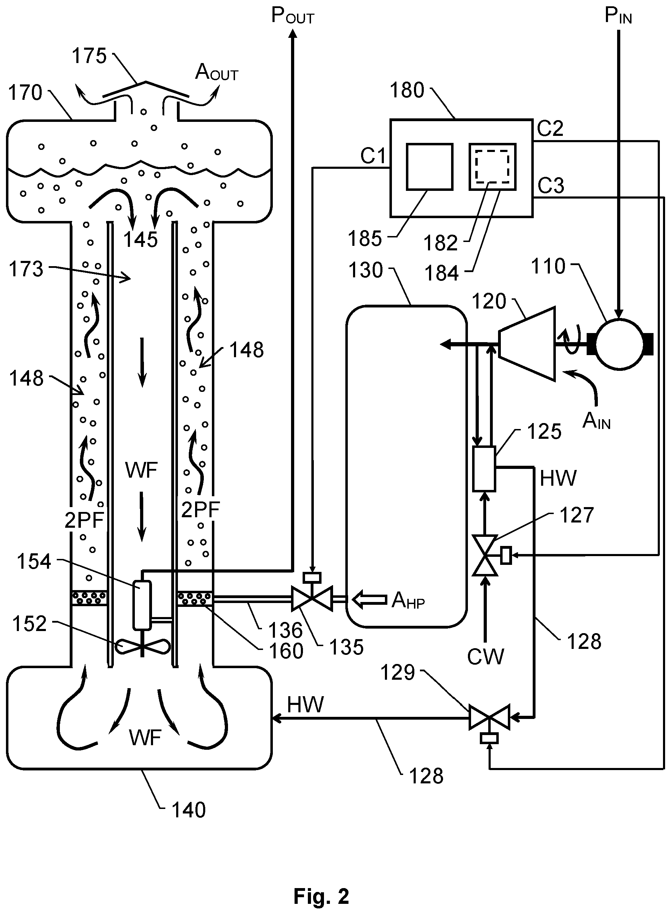

Figure 2 schematically illustrates an energy storage system according to a second embodiment of the invention. In Figure 2, all reference labels that also occur in Figure 1, designate the same unit, signal or event as described above with reference to Figure 1.

As is apparent, the embodiment of Figure 1, is structurally very similar to that of Figure 2. The major difference is that in Figure 2, the diffusor 160 is configured to cause the mixed flow 2PF of water and air to flow upwards in an outer conduit 148 of two concentrically arranged conduits, whereas an inner conduit 173 thereof is configured to lead the water part flow WF only in a downward direction to the turbine 152 and the generator 154 to produce the output electrical energy P_{OUT}.

Due to their structural layouts, the designs according to the embodiments described in Figures 1 and 2 are suitable for integration into a wind power tower. Namely, this attains a highly space efficient overall design of a renewable energy production plant.

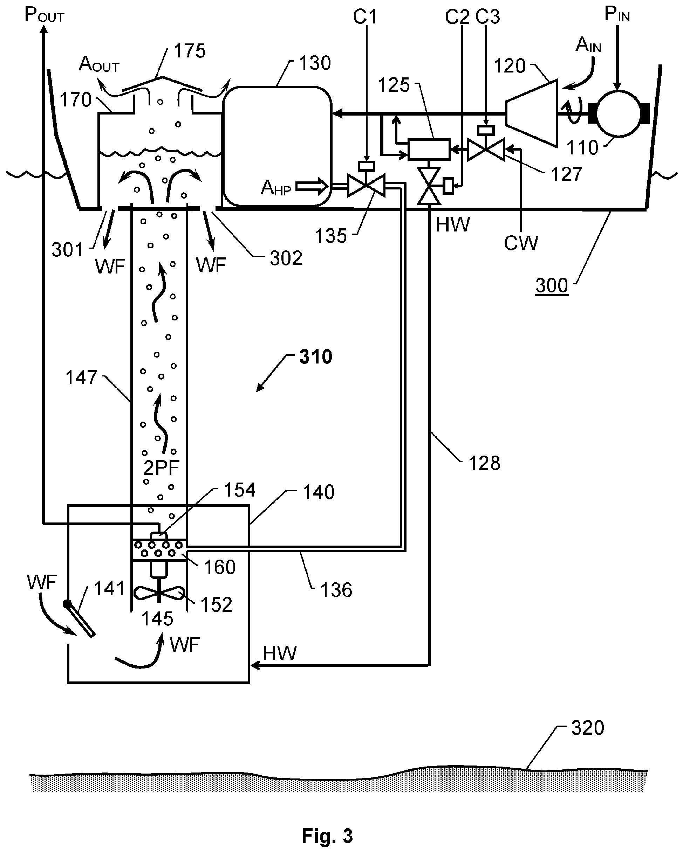

Figure 3 schematically illustrates an energy storage system according to a third embodiment of the invention. In Figure 3, all reference labels that also occur in Figures 1 and/or designate the same unit, signal or event as described above with reference to Figures 1 and/or 2.

The embodiment of Figure 3, is similar to that of Figure 1 in that the output electrical energy P_{OUT} is produced based on the water part flow WF only of the mixed flow 2PF of water and air, which water part flow WF flows in an upward direction through a conduit 147. In Figure 3, however, the accumulator tank 130, the first fluid reservoir 170 as well as the first set of energy converters are carried by a surface vessel 300 while the second fluid reservoir 140 is submerged in a body of water 310 below the surface vessel 300. The first fluid reservoir 170 contains at least one opening 301 and 302 respectively to the body of water 310, which at least one opening is configured to expel a flow of water WF out from the first fluid reservoir 170 into the body of water 310. The second fluid reservoir 140 contains at least one selectively closable door 141 configured to allow a flow of water WF from the body of water 310 into the second fluid reservoir 140. Thus, here, the body of water 310 constitutes a conduit configured to convey the flow of water WF from the first fluid reservoir 170 to the second fluid reservoir 140. Preferably, for flexibility reasons, the second fluid reservoir 140 is arranged to float freely amidst the body of water 310. However, according to the invention, there is nothing to exclude that the second fluid reservoir 140 sits on a seabed 320 either. The above-described embodiment is advantageous because it allows the proposed energy storage system to conveniently moved and relocated to an energy production site where it is currently needed.

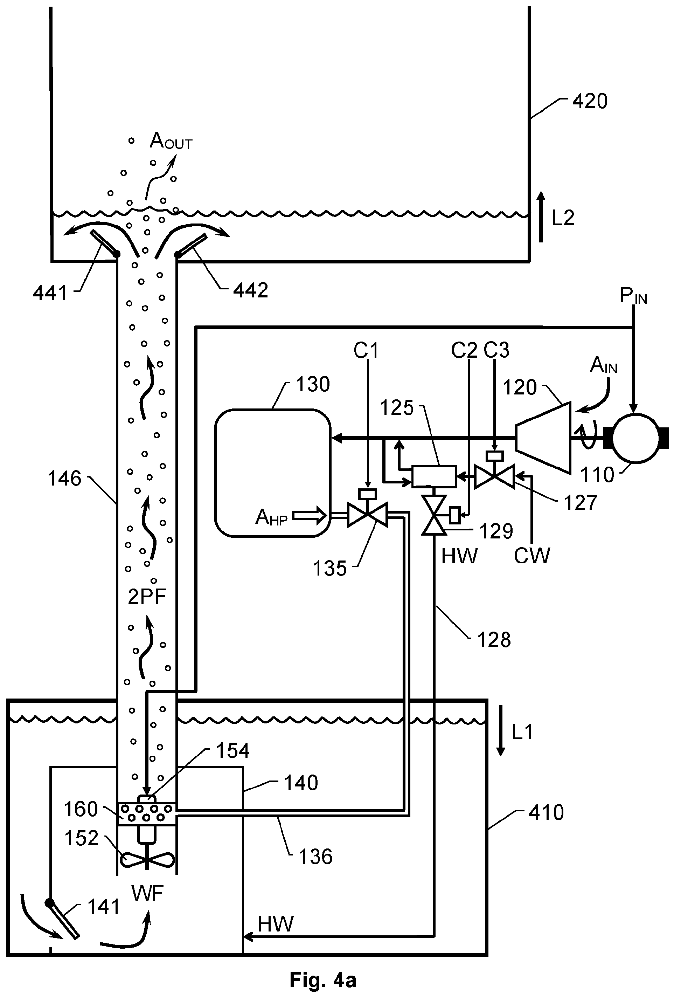

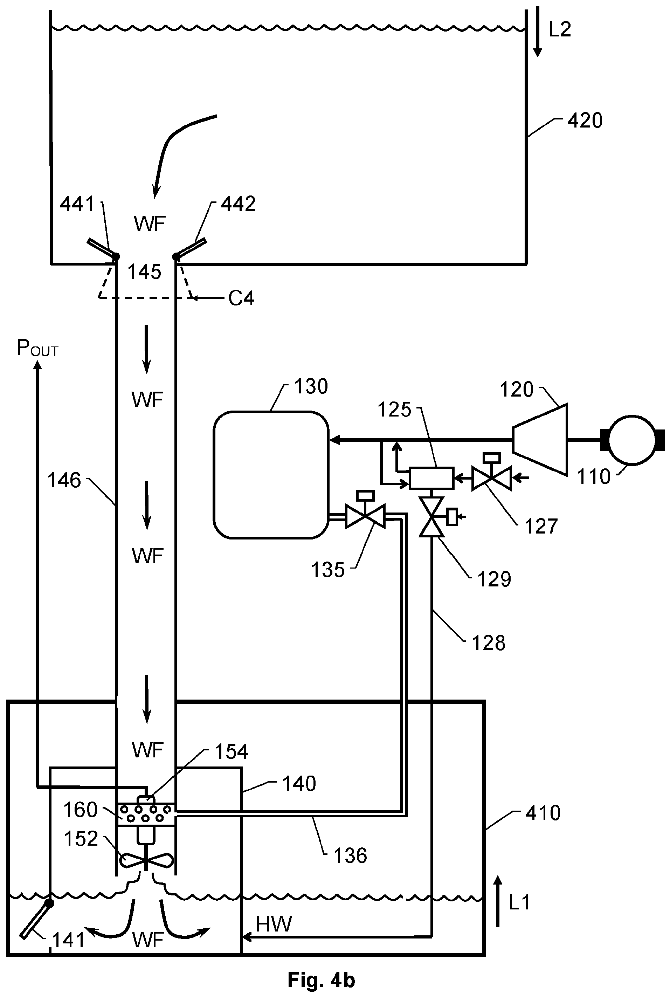

Figures 4a and 4b schematically illustrate an energy storage system according to a fourth embodiment of the invention. Figures 4a and 4b, all reference labels that also occur in Figures 1 -3 designate the same unit, signal or event as described above with reference to Figures 1 - 3.

Figure 4a shows the energy storage system containing a low level water storage pool 410 and a high-level water storage pool 420, which are arranged at mutually different heights relative to the sea level. Here, a bi-directional conduit 146 is provided between the low- and high-level water storage pools 410 and 420. The bi-directional conduit 146 contains the turbine 152 and the generator 154.

In an energy storage sequence of a cycle implemented by the energy storage system, the compressor 110 receives the incoming electrical energy P_{IN} to cause production of pressurized air A_{HP} in the accumulator tank 130. However, in contrast to the above-described embodiments of the invention, in the energy storage sequence the incoming electrical energy P_{IN} is also fed to the generator 154 so that this component acts as a motor, and consequently, the turbine 152 functions as propeller driving the mixed flow 2PF of water and air produced by the diffusor 160 upwards through the bi-directional conduit 146. Consequently, water is transported from the low level water storage pool 410 up to the high-level water storage pool 420, which means that a first water level L1 of the low level water storage pool 410 is lowered and a second water level L2 of the high level water storage pool 420 is elevated. Since the pressurized air A_{HP} injected by the diffusor cooperates with turbine's 152 propulsion of the water part WF of the flow, the level difference between the low- and high level water storage pools 410 and 420 may be substantial. The high-level water storage pool 420 is provided with a valve arrangement, here exemplified by first and second doors 441 and 442, configured to selectively cause a fluid connection between the low- and high-level water storage pools 410 and 420 respectively. The valve arrangement may thus selectively (i) allow water into the high-level water storage pool 420, (ii) keep water stored therein, or (iii) let water stored in the high-level water storage pool 420 flow out therefrom via the bi-directional conduit 146. Thus, during the energy storage sequence of the cycle, any incoming electrical energy P_{IN} may be converted into potential energy in the form water accumulated in the high-level water storage pool 420.

Referring now to Figure 4b, in a subsequent energy production sequence of the cycle implemented by the energy storage system, a control signal C4 from the control unit 180 operates the valve arrangement 441 and 442, such that the water stored in the high-level water storage pool 420 is allowed to descend through the bi-directional conduit 146 down to the low-level water storage pool 441. As a result, the water flow WF causes the turbine 152 to rotate and the generator 154 produce the output electrical energy P_{OUT}. During this process, the first water level L1 of the low level water storage pool 410 is elevated, and the second water level L2 of the high level water storage pool 420 is lowered. The substantial level difference between the low- and high level water storage pools 410 and 420 renders it possible to produce output electrical energy P_{OUT} at comparatively high-power.

It is generally advantageous if the above-described energy-storage procedure is effected in an automatic manner by executing one or more computer programs. Therefore, the control unit 180 preferably includes processing circuitry in the form of at least one processor 185 and a memory unit 184, i.e. non-volatile data carrier, storing a computer program 182, which, in turn, contains software for making the at least one processor 185 execute the actions mentioned in this disclosure when the computer program 182 is run on the at least one processor 185.

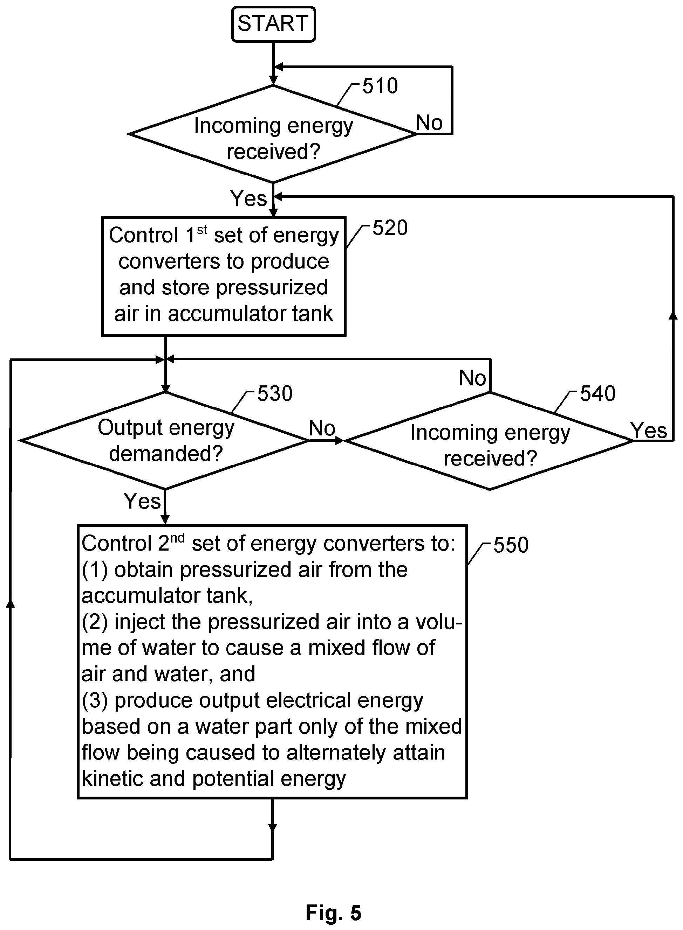

In order to sum up, and with reference to the flow diagram in Figure 5, we will now describe the computer-implemented method according to the invention for obtaining incoming intermittent electrical energy and delivering output electrical energy on demand, which method is executed by the at least one processor 185 of the control unit 180.

In a first step 510, it is checked if incoming electrical energy is received; and if so, a step 520 follows. Otherwise, the procedure loops back and stays in step 510.

In step 520, the first set of energy converters are controlled to pick up ambient air, and based thereon produce and store pressurized air in an accumulator tank using the incoming intermittent electrical energy. As explained above with reference to Figure 4a, this may further involve employing the generator as a motor and the turbine as a propeller to drive the mixed flow 2PF upwards through the bi-directional conduit thus transporting a flow of water from the low level water storage pool up to the high-level water storage pool.

Thereafter, a step 530 checks if output electrical energy is demanded; and if so, a step 550 follows. Otherwise, the procedure continues to a step 540.

Step 540 checks if further incoming electrical energy is received; and if so, the procedure loops back to step 520. If no further incoming electrical energy is received; the procedure loops back to step 530.

In step 550, the second set of energy converters is controlled to obtain the pressurized air from the accumulator tank, inject the pressurized air into a volume of water so as to cause a mixed flow of water and air in which mixed flow a water part alternately attains potential energy and kinetic energy, and produce the output electrical energy based on the water part flow only of the mixed flow. As described above with reference to Figures 4a and 4b, the mixed flow of water and air may already have been utilized to provide potential energy to a volume of water, which potential energy provides the sole source of energy for producing the output electrical energy in step 550.

After step 550, the procedure loops back to step 530.

All of the process steps, as well as any sub-sequence of steps, described with reference to Figure 5 may be controlled by means of a programmed processor. Moreover, although the embodiments of the invention described above with reference to the drawings comprise processor and processes performed in at least one processor, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/Versatile Disk), a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal, which may be conveyed, directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The invention is not restricted to the described embodiments in the figures, but may be varied freely within the scope of the claims.

## Claims

1. An energy storage system for obtaining incoming intermittent electrical energy (P_{IN}) and delivering output electrical energy (P_{OUT}) on demand, the system comprising:
an accumulator tank (130),
a first set of energy converters (110, 120, 125) configured to pick up ambient air (A_{IN}) and based thereon produce pressurized air (A_{HP}) in the accumulator tank (130) using the incoming intermittent electrical energy (P_{IN}),
a second set of energy converters (152, 154, 160) configured to: obtain the pressurized air (A_{HP}) from the accumulator tank (130), inject the pressurized air (A_{HP}) into a volume of water so as to cause a mixed flow (2PF) of water and air in which mixed flow a water part (WF) alternately attains potential energy and kinetic energy, and produce the output electrical energy (P_{OUT}) based on the water part flow (WF) only of the mixed flow (2PF), wherein the first set of energy converters comprises:
an electric motor (110) configured to be operated in response to the incoming intermittent electrical energy (P_{IN}),
a compressor (120) configured to be driven by the electric motor (110) and produce the pressurized air (A_{HP}) based on the ambient air (A_{IN}),
**characterized in that** the system further comprises:
a cooler (125) configured to exchange heat from the compressor (120) and thus produce heated water (HW),
a first fluid reservoir (170, 420) configured to separate out air (A_{OUT}) from the mixed flow (2PF),
at least one first conduit (146, 147, 148, 149) configured to convey the mixed flow (2PF) of water and air to the first fluid reservoir (170, 420),
a second fluid reservoir (140),
at least one second conduit (171, 173, 310) configured to convey the water part flow (WF) from the first fluid reservoir (170, 420) to the second fluid reservoir (140), wherein the second fluid reservoir (140) is arranged in fluid connection with a diffusor (160) comprised in the second set of energy converters, which diffusor (160) is configured to inject the pressurized air (A_{HP}) into the volume of water to cause the mixed flow (2PF),
wherein the second set of energy converters comprises:
a turbine (152) configured to be propelled by the water part flow (WF),
a generator (154) mechanically connected to a rotation axis of the turbine (152), which generator (154) is configured to produce the output electrical energy (P_{OUT}) in response to actuation of the turbine (152), and
a hot-water conduit (128) configured to feed the heated water (HW) from the cooler (125) into the second fluid reservoir (140).

2. The energy storage system according to claim 1, wherein:
the accumulator tank (130) and the first set of energy converters (110, 120, 125) are comprised in a surface vessel (300),
the second fluid reservoir (140) is configured to be submerged in a body of water (310) below the surface vessel (300), and
the at least one second conduit is constituted by the body of water (310).

3. The energy storage system according to any one of claims 1 or 2, wherein the second set of energy converters (152, 154, 160) is configured to produce the output electrical energy (P_{OUT}) based on the water part flow (WF) flowing in a downward direction.

4. The energy storage system according to any one of claims 1 or 2, wherein the second set of energy converters (152, 154, 160) is configured to produce the output electrical energy (P_{OUT}) based on the water part flow (WF) flowing in an upward direction.

5. The energy storage system according to claim 1, comprising:
low- and high-level water storage pools (410; 420) arranged at different heights,
a bi-directional conduit (146) between the low- and high-level water storage pools (410; 420), which bi-directional conduit (146) comprises the turbine (152) and the generator (154), and
a valve arrangement (441, 442) configured to selectively cause a fluid connection between the low- and high-level water storage pools (410; 420), wherein:
the low-level water storage pool (410) comprises the second fluid reservoir (140),
the low-level water storage pool (410) is configured to hold water at a first level of potential energy,
the diffusor (160) is configured to pump an amount of water from the low-level water storage pool (410) via the second fluid reservoir (140) and the bi-directional conduit (146) to the high-level water storage pool (420) in the form of the mixed flow (2PF) such that said amount of water, when located in the high-level water storage pool (420), attains a second level of potential energy above the first level of potential energy,
the valve arrangement (441, 442) is operable in response to a control signal (C4), and the valve arrangement (441, 442) is configured to let water from the high-level water storage pool (420) descend through the bi-directional conduit (146) to the low-level water storage pool (441) thus causing the generator (154) to produce the output electrical energy (P_{OUT}).

6. The energy storage system according to any one of the preceding claims, wherein the first set of energy converters (110, 120, 125) is configured to produce the pressurized air (A_{HP}) in the accumulator tank (130) by means of at least one of a compressed air energy storage technique and a liquid air energy storage technique.

7. A computer-implemented method executed in at least one processor (430) of a control unit (180) for controlling the energy storage system according to any one of the preceding claims, the method comprising:
controlling (C1, C2, C3) the first set of energy converters (110, 120, 125) to pick up ambient air (A_{IN}) and based thereon produce and store pressurized air (A_{HP}) in an accumulator tank (130) using the incoming intermittent electrical energy (P_{IN}),
controlling the second set of energy converters (152, 154, 160) to: obtain the pressurized air (A_{HP}) from the accumulator tank (130),
inject the pressurized air (A_{HP}) into a volume of water so as to cause the mixed flow (2PF) of water and air in which mixed flow a water part (WF) alternately attains potential energy and kinetic energy, and
produce the output electrical energy (P_{OUT}) based on the water part flow (WF) only of the mixed flow (2PF),
**characterized by:**
controlling (C3; 127) the heated water (HW) to be fed via the hot-water conduit (128) from the cooler (125) into the second fluid reservoir (140).

8. A computer program (182) loadable into a non-volatile data carrier (184) communicatively connected to at least one processor (430), the computer program (182) comprising software for executing the method according to claim 7 when the computer program (182) is run on the at least one processor (185).

9. A non-volatile data carrier (184) containing the computer program (182) of the claim 8.

## Patentansprüche

1. Energiespeichersystem zur Gewinnung ankommender fluktuierender elektrischer Energie (P_{IN}) und zur Lieferung ausgegebener elektrischer Energie (P_{OUT}) nach Bedarf, wobei das System aufweist:
einen Pufferspeicher (130),
einen ersten Satz von Energiewandlern (110, 120, 125), die konfiguriert sind, um Umgebungsluft (A_{IN}) aufzunehmen und basierend darauf unter Verwendung der ankommenden fluktuierenden elektrischen Energie (P_{IN}) Druckluft (A_{HP}) in dem Pufferspeicher (130) zu erzeugen,
einen zweiten Satz von Energiewandlern (152, 154, 160), die konfiguriert sind zum: Gewinnen der Druckluft (A_{HP}) aus dem Pufferspeicher (130), Einspritzen der Druckluft (A_{HP}) in ein Wasservolumen, um eine Mischströmung (2PF) aus Wasser und Luft zu bewirken, wobei in dieser Mischströmung ein Wasseranteil (PF) abwechselnd potentielle Energie und kinetische Energie gewinnt, und Erzeugen der ausgegebenen elektrischen Energie (P_{OUT}) lediglich basierend auf der Wasseranteilströmung (WF) der Mischströmung (2PF), wobei der erste Satz von Energiewandlern aufweist:
einen Elektromotor (110), der konfiguriert ist, um ansprechend auf die ankommende fluktuierende elektrische Energie (P_{IN}) betätigt zu werden,
einen Kompressor (120), der konfiguriert ist, um von dem Elektromotor (110) angetrieben zu werden und die Druckluft (A_{HP}) basierend auf der Umgebungsluft (A_{IN}) zu erzeugen,
**dadurch gekennzeichnet, dass** das System ferner aufweist:
einen Kühler (125), der konfiguriert ist, um Wärme von dem Kompressor (120) auszutauschen und auf diese Weise erwärmtes Wasser (HW) zu erzeugen,
einen ersten Fluidvorratsbehälter (170, 420), der konfiguriert ist, um Luft (A_{OUT}) aus der Mischströmung (2PF) abzutrennen,
wenigstens einen ersten Kanal (146, 147, 148, 149), der konfiguriert ist, um die Mischströmung (2PF) aus Wasser und Luft zu dem ersten Fluidvorratsbehälter (170, 420) zu befördern,
einen zweiten Fluidvorratsbehälter (140),
wenigstens einen zweiten Kanal (171, 173, 310), der konfiguriert ist, um die Wasseranteilströmung (WF) aus dem ersten Fluidvorratsbehälter (170, 420) zu dem zweiten Fluidvorratsbehälter (140) zu befördern, wobei der zweite Fluidvorratsbehälter (140) in einer Fluidverbindung mit einem Diffusor (160), der in dem zweiten Satz von Energiewandlern enthalten ist, eingerichtet ist, wobei der Diffusor (160) konfiguriert ist, um die Druckluft (A_{HP}) in das Wasservorlumen einzuspritzen, um die Mischströmung (2PF) zu bewirken,
wobei der zweite Satz von Energiewandlern aufweist:
eine Turbine (152), die konfiguriert ist, um durch die Wasseranteilströmung (WF) angetrieben zu werden,
einen Generator (154), der mechanisch mit einer Drehachse der Turbine (152) verbunden ist, wobei der Generator (154) konfiguriert ist, um die ausgegebene elektrische Energie (P_{OUT}) ansprechend auf die Betätigung der Turbine (152) zu erzeugen, und
einen Warmwasserkanal (128), der konfiguriert ist, um das erwärmte Wasser (HW) von dem Kühler (125) in den zweiten Fluidvorratsbehälter (140) zu speisen.

2. Energiespeichersystem nach Anspruch 1, wobei:
der Pufferspeicher (130) und der erste Satz von Energiewandlern (110, 120, 125) in einem Oberflächengefäß (300) enthalten sind,
wobei der zweite Fluidvorratsbehälter (140) konfiguriert ist, um in einem Gewässer (310) unterhalb des Oberflächengefäßes (300) eingetaucht zu werden, und
der wenigstens eine zweite Kanal durch das Gewässer (310) gebildet wird.

3. Energiespeichersystem nach einem der Ansprüche 1 oder 2, wobei der zweite Satz von Energiewandlern (152 ,154, 160) konfiguriert ist, um die ausgegebene elektrische Energie (P_{OUT}) basierend auf der Wasseranteilströmung (WF), die in eine Abwärtsrichtung strömt, zu erzeugen.

4. Energiespeichersystem nach einem der Ansprüche 1 oder 2, wobei der zweite Satz von Energiewandlern (152, 154, 160) konfiguriert ist, um die ausgegebene elektrische Energie (P_{OUT}) basierend auf der Wasseranteilströmung (WF), die in eine Aufwärtsrichtung strömt, zu erzeugen.

5. Energiespeichersystem nach Anspruch 1, das aufweist:
Hoch- und Tiefwasserspeicherbecken (410; 420), die auf unterschiedlichen Höhen eingerichtet sind,
einen Zweirichtungskanal (146) zwischen den Hoch- und Tiefwasserspeicherbecken (410; 420), wobei der Zweirichtungskanal (146) die Turbine (152) und den Generator (154) aufweist, und
eine Ventilanordnung (441, 442), die konfiguriert ist, um wahlweise eine Fluidverbindung zwischen den Hoch- und Tiefwasserspeicherbecken (410; 420) zu bewirken, wobei:
das Tiefwasserspeicherbecken (410) den zweiten Fluidvorratsbehälter (140) aufweist,
das Tiefwasserspeicherbecken (410) konfiguriert ist, um Wasser auf einem ersten Niveau potentieller Energie aufzunehmen,
der Diffusor (160) konfiguriert ist, um eine Menge an Wasser über den zweiten Fluidvorratsbehälter (140) und den Zweirichtungskanal (146) aus dem Tiefwasserspeicherbecken (410) in der Form der Mischströmung (2PF) zu dem Hochwasserspeicherbecken (420) zu pumpen, so dass diese Wassermenge, wenn sie sich in dem Hochwasserspeicherbecken (420) befindet, ein zweites Niveau potentieller Energie über dem ersten Niveau potentieller Energie erreicht,
die Ventilanordnung (441, 442) ansprechend auf ein Steuersignal (C4) betriebsfähig ist, und die Ventilanordnung (441, 442) konfiguriert ist, um Wasser von dem Hochwasserspeicherbecken (420) durch den Zweirichtungskanal (146) zu dem Tiefwasserspeicherbecken (441) sinken zu lassen, wobei bewirkt wird, dass der Generator (154) die ausgegebene elektrische Energie (P_{OUT}) erzeugt.

6. Energiespeichersystem nach einem der vorhergehenden Ansprüche, wobei der erste Satz von Energiewandlern (110, 120, 125) konfiguriert ist, um die Druckluft (A_{HP}) in dem Pufferspeicher (130) mit Hilfe eines Druckluft-Energiespeicherverfahrens und/oder eines Flüssigluft-Energiespeicherverfahrens zu erzeugen.

7. Computerimplementiertes Verfahren, das in wenigstens einem Prozessor (430) einer Steuereinheit (180) zum Steuern des Energiespeichersystems nach einem der vorhergehenden Ansprüche ausgeführt wird, wobei das Verfahren aufweist:
Steuern (C1, C2, C3) des ersten Satzes von Energiewandlern (110, 120, 125), um Umgebungsluft (A_{IN}) aufzunehmen und basierend darauf Druckluft (A_{HP}) in einem Pufferspeicher (130) unter Verwendung der ankommenden fluktuierenden elektrischen Energie (P_{IN}) zu speichern,
Steuern des zweiten Satzes von Energiewandlern (152, 154, 160), um: die Druckluft (A_{HP}) aus dem Pufferspeicher (130) zu gewinnen,
die Druckluft (A_{HP}) in ein Wasservolumen einzuspritzen, um die Mischströmung (2PF) aus Wasser und Luft zu bewirken, wobei in der Mischströmung ein Wasseranteil (WF) abwechselnd potentielle Energie und kinetische Energie gewinnt, und
die ausgegebene elektrische Energie (P_{OUT}) lediglich basierend auf der Wasseranteilströmung (WF) der Mischströmung (2PF) zu erzeugen,
**gekennzeichnet durch**:
Steuern (C3; 127) des erwärmten Wassers (HW), so dass es über den Warmwasserkanal (128) von dem Kühler (125) in den zweiten Fluidvorratsbehälter (140) gespeist wird.

8. Computerprogramm (182), das in einen nichtflüchtigen Datenträger (184) ladbar ist, welcher kommunikationsfähig mit wenigstens einem Prozessor (430) verbunden ist, wobei das Computerprogramm (182) Software zum Ausführen des Verfahrens nach Anspruch 7 aufweist, wenn das Computerprogramm (182) aus dem wenigstens einen Prozessor (185) laufen gelassen wird.

9. Nichtflüchtiger Datenträger (184), der das Computerprogramm (182) des Anspruchs 8 enthält.

## Revendications

1. Système de stockage d'énergie pour obtenir de l'énergie électrique intermittente entrante (P_{IN}) et fournir de l'énergie électrique de sortie (P_{OUT}) à la demande, le système comprenant :
un réservoir accumulateur (130),
un premier ensemble de convertisseurs d'énergie (110, 120, 125) configuré pour capter de l'air ambiant (A_{IN}) et, sur cette base, produire de l'air pressurisé (A_{HP}) dans le réservoir accumulateur (130) en utilisant l'énergie électrique intermittente entrante (P_{IN}),
un deuxième ensemble de convertisseurs d'énergie (152, 154, 160) configuré pour : obtenir l'air pressurisé (A_{HP}) à partir du réservoir accumulateur (130), injecter l'air pressurisé (A_{HP}) dans un volume d'eau de manière à provoquer un flux mixte (2PF) d'eau et d'air dans lequel une partie d'eau (WF) du flux mixte acquiert alternativement une énergie potentielle et une énergie cinétique, et produire l'énergie électrique de sortie (P_{OUT}) sur la base du flux d'eau (WF) uniquement du flux mixte (2PF), dans lequel le premier ensemble de convertisseurs d'énergie comprend :
un moteur électrique (110) configuré pour fonctionner en réponse à l'énergie électrique intermittente entrante (P_{IN}),
un compresseur (120) configuré pour être entraîné par le moteur électrique (110) et produire l'air pressurisé (A_{HP}) sur la base de l'air ambiant (A_{IN}),
**caractérisé en ce que** le système comprend en outre :
un refroidisseur (125) configuré pour échanger de la chaleur provenant du compresseur (120) et produire ainsi de l'eau chauffée (HW),
un premier réservoir de fluide (170, 420) configuré pour séparer de l'air de sortie (A_{OUT}) du flux mixte (2PF),
au moins un premier conduit (146, 147, 148, 149) configuré pour acheminer le flux mixte (2PF) d'eau et d'air vers le premier réservoir de fluide (170, 420),
un deuxième réservoir de fluide (140),
au moins un deuxième conduit (171, 173, 310) configuré pour acheminer le flux d'eau (WF) du premier réservoir de fluide (170, 420) vers le deuxième réservoir de fluide (140), dans lequel le deuxième réservoir de fluide (140) est disposé en communication fluidique avec un diffuseur (160) compris dans le deuxième ensemble de convertisseurs d'énergie, lequel diffuseur (160) est configuré pour injecter l'air pressurisé (A_{HP}) dans le volume d'eau afin de provoquer le flux mixte (2PF),
dans lequel le deuxième ensemble de convertisseurs d'énergie comprend :
une turbine (152) configurée pour être propulsée par le flux d'eau (WF),
un générateur (154) relié mécaniquement à un axe de rotation de la turbine (152), lequel générateur (154) est configuré pour produire l'énergie électrique de sortie (P_{OUT}) en réponse à l'actionnement de la turbine (152), et
un conduit d'eau chaude (128) configuré pour alimenter le second réservoir de fluide (140) en eau chauffée (HW) provenant du refroidisseur (125).

2. Système de stockage d'énergie selon la revendication 1, dans lequel :
le réservoir accumulateur (130) et le premier ensemble de convertisseurs d'énergie (110, 120, 125) sont compris dans un récipient de surface (300),
le deuxième réservoir de fluide (140) est configuré pour être immergé dans une masse d'eau (310) sous le récipient de surface (300), et
le au moins un deuxième conduit est constitué par la masse d'eau (310).

3. Système de stockage d'énergie selon l'une quelconque des revendications 1 ou 2, dans lequel le deuxième ensemble de convertisseurs d'énergie (152, 154, 160) est configuré pour produire l'énergie électrique de sortie (P_{OUT}) sur la base du débit d'eau (WF) s'écoulant dans une direction vers le bas.

4. Système de stockage d'énergie selon l'une quelconque des revendications 1 ou 2, dans lequel le deuxième ensemble de convertisseurs d'énergie (152, 154, 160) est configuré pour produire l'énergie électrique de sortie (P_{OUT}) sur la base du débit d'eau (WF) s'écoulant dans une direction vers le haut.

5. Système de stockage d'énergie selon la revendication 1, comprenant :
des bassins de stockage d'eau de niveau bas et de niveau haut (410 ; 420) disposés à des hauteurs différentes,
un conduit bidirectionnel (146) entre les bassins de stockage d'eau de niveau bas et de niveau haut (410 ; 420), lequel conduit bidirectionnel (146) comprend la turbine (152) et le générateur (154), et
un agencement de vannes (441, 442) configuré pour établir de manière sélective une connexion fluidique entre les bassins de stockage d'eau de niveau bas et de niveau haut (410 ; 420), dans lequel :
le bassin de stockage d'eau de niveau bas (410) comprend le deuxième réservoir de fluide (140),
le bassin de stockage d'eau de niveau bas (410) est configuré pour contenir de l'eau à un premier niveau d'énergie potentielle,
le diffuseur (160) est configuré pour pomper une quantité d'eau depuis le bassin de stockage d'eau de niveau bas (410) via le deuxième réservoir de fluide (140) et le conduit bidirectionnel (146) vers le bassin de stockage d'eau de niveau haut (420) sous la forme d'un flux mixte (2PF) de telle sorte que ladite quantité d'eau, lorsqu'elle se trouve dans le bassin de stockage d'eau de niveau haut (420), atteint un deuxième niveau d'énergie potentielle supérieur au premier niveau d'énergie potentielle,
l'agencement de vannes (441, 442) est actionnable en réponse à un signal de commande (C4), et l'agencement de vannes (441, 442) est configuré pour laisser l'eau provenant du bassin de stockage d'eau de niveau haut (420) descendre à travers le conduit bidirectionnel (146) vers le bassin de stockage d'eau de niveau bas (441), amenant ainsi le générateur (154) à produire l'énergie électrique de sortie (P_{OUT}).

6. Système de stockage d'énergie selon l'une quelconque des revendications précédentes, dans lequel le premier ensemble de convertisseurs d'énergie (110, 120, 125) est configuré pour produire l'air pressurisé (A_{HP}) dans le réservoir accumulateur (130) au moyen d'au moins une technique de stockage d'énergie à air comprimé et une technique de stockage d'énergie à air liquide.

7. Procédé mis en œuvre par ordinateur, exécuté dans au moins un processeur (430) d'une unité de commande (180) pour commander le système de stockage d'énergie selon l'une quelconque des revendications précédentes, le procédé comprenant :
la commande (C1, C2, C3) du premier ensemble de convertisseurs d'énergie (110, 120, 125) pour prélever de l'air ambiant (A_{IN}) et, sur cette base, produire et stocker de l'air pressurisé (A_{HP}) dans un réservoir accumulateur (130) en utilisant l'énergie électrique intermittente entrante (P_{IN}),
la commande du deuxième ensemble de convertisseurs d'énergie (152, 154, 160) pour :
obtenir l'air pressurisé (A_{HP}) à partir du réservoir accumulateur (130),
injecter l'air pressurisé (A_{HP}) dans un volume d'eau de manière à provoquer le flux mixte (2PF) d'eau et d'air dans lequel une partie d'eau (WF) du flux mixte atteint alternativement une énergie potentielle et une énergie cinétique, et
produire l'énergie électrique de sortie (P_{OUT}) sur la base du flux eau (WF) uniquement du flux mixte (2PF),
**caractérisé par** :
la commande (C3 ; 127) de l'eau chauffée (HW) à alimenter via le conduit d'eau chaude (128) depuis le refroidisseur (125) dans le deuxième réservoir de fluide (140).

8. Programme informatique (182) pouvant être chargé dans un support de données non-volatile (184) connecté de manière communicative à au moins un processeur (430), le programme informatique (182) comprenant un logiciel pour exécuter le procédé selon la revendication 7 lorsque le programme informatique (182) est exécuté sur le au moins un processeur (185).

9. Support de données non-volatile (184) contenant le programme informatique de la revendication 8.
